# EUROPÄISCHE PATENTSCHRIFT

(11) **EP 0 828 894 B1**
(45) Veröffentlichungstag und Bekanntmachung des Hinweises auf die Patenterteilung: **27.09.2000**
(21) Anmeldenummer: 96919709.4
(22) Anmeldetag: 08.05.1996
(51) Int. Cl.: E01C 11/22, A01G 1/08

(54) **BEFESTIGUNGSSYSTEM FÜR RANDEINFASSUNGEN AN BAULICHEN ANLAGEN**
EDGING ANCHORING SYSTEM FOR CONSTRUCTION WORKS
SYSTEME DE FIXATION DE BORDURES POUR LA CONSTRUCTION

(30) Priorität: 24.05.1995 DE 29508701 U
(43) Veröffentlichungstag der Anmeldung: 18.03.1998
(73) Patentinhaber: Bremzay, Viktor, 70192 Stuttgart (DE); Krüger, Bernd, 70180 Stuttgart (DE); Möhrle, Hubert, 72666 Neckartailfingen (DE)
(72) Erfinder: Bremzay, Viktor, 70192 Stuttgart (DE); Krüger, Bernd, 70180 Stuttgart (DE); Möhrle, Hubert, 72666 Neckartailfingen (DE)
(86) Internationale Anmeldenummer: EP9601920
(87) Internationale Veröffentlichungsnummer: WO9637659

(56) Entgegenhaltungen:
- WO-A-91/09175
- GB-A- 389 110
- US-A- 4 349 596

## Beschreibung

Die Erfindung betrifft ein Befestigungssystem für Randeinfassungen, insbesondere Markierungs-, Trennungs- und Befestigungssysteme bei Garten- und/oder Weggestaltungen, der im Oberbegriff des Anspruchs 1 angegebenen Art.

Ein derartiges Befestigungssystem ist aus der DE-A-33 00 090 bekannt, bei dem Betoneinfassungen unterschiedlicher Art mit entsprechenden Fundamenten, beispielsweise zur Straßenrandbefestigung, versehen werden. Hierbei werden z.B. Einfassung aus Metall (Stahl- oder Aluminiumband) verwendet und es sind dabei besondere Befestigungspunkte zur Fixierung und Richtungsstabilisierung in Betonfundamenten vorhanden. Alternativ zu Metall werden auch Kunststoffeinfassungen als durchgängige Strangprofile mit punktueller Befestigungsmöglichkeit über Betonfundamente oder Erdnägel verwendet.

Bei einem aus der US-A-4,349,596 bekannten Befestigungssystem für Randeinfassungen an Straßen oder Wegen werden individuell an die bauliche Anlage angepaßte Einfassungsstreifen direkt mit Erdnägeln im Erdreich verankert und die einzelnen Einfassungsstreifen werden über zusätzliche Verbindungselemente miteinander verbunden.

Auch aus der WO-A-91/09175 ist ein Befestigungssystem bekannt, bei dem die kompletten Einfassungselemente unmittelbar und fest über Erdnägel mit dem Erdreich und anschließend mit dem einzufassenden Material verbunden werden. Die einzelnen Einfassungselemente werden zuvor über Schnappverbindungen miteinander gekoppelt.

Nachteilig bei den bekannten Systemen ist vor allem ein hoher Material- und Arbeitsaufwand beim Einbau bzw. Verlegen dieser Systeme in den Untergrund. Es ist hierbei eine beträchtliche Vorbereitung des Untergrundes, beispielsweise eine beträchtliche Aushubarbeit für die systembedingte Befestigung der Einfassungen über Punkt- oder Streifenfundamente aus Beton zu leisten. Eine mangelnde Variabilität z.B. bei Bögen erschwert hierbei die Anlagengestaltung.

Weiterhin ist die unbefriedigende Ausrichtungsmöglichkeit und Richtungsstabilität der verwendeten Einfassungen nachteilig bei statischen Belastungen; sowie eine durch die Befestigungsart (z.B. über Betonfundamente) eingeschränkte Ausrichtmöglichkeit des Bandes beim Verlegen. Es ergeben sich nach dem Einbau geringe Möglichkeiten für nachträgliche Richtungskorrekturen und außerdem ist ein hoher Entsorgungsaufwand für dieses feste, irreversibel eingebaute System mit Betonfundamenten notwendig, da direkte Wiederverwertungsmöglichkeiten äußerst gering sind. Nachteilig ist darüber hinaus auch der hohe handwerkliche Arbeitsaufwand bei der Herstellung der Systemkomponenten aus Halbzeugware und der Fundamente.

Der Erfindung liegt die Aufgabe zugrunde, ein Befestigungssystem der bekannten Art so fortzubilden, daß ein Einbau ohne hohen zusätzlichen Material-und Arbeitsaufwand direkt in den anstehenden Untergrund/Unterbau ermöglicht ist und eine hohe Systemstabilität und -variabilität erreicht wird.

Diese Aufgabe wird mit den Merkmalen des Anspruchs 1 gelöst.

In vorteilhafter Weise ermöglicht die erfindungsgemäße Gestaltung des eingangs beschriebenen Befestigungssystems mit den Merkmalen des Anspruchs 1 eine einfache Korrekturmöglichkeit der Längs- und Bogenrichtung (Radiusverlauf) nach erfolgtem Einbau, sowie eine eventuell erforderliche Richtungsstabilisierung nach Erfordernis durch eine einfache Erhöhung der Anzahl der Befestigungselemente.

Die erfindungsgemäßen Systemkomponenten weisen eine hohe Variabilität hinsichtlich der verwendbaren Werkstoffe auf, wobei auch innerhalb des Systems Materialwechsel möglich sind. Die Materialeigenschaften einzelner Systemkomponenten stehen in unmittelbarem Zusammenhang mit den gewünschten bzw. erforderlichen, verwendungsabhängigen physikalischen Anforderungen an das Materialverhalten bei mechanischer, chemischer und thermischer Einwirkung (z.B. Struktur- und Oberflächenstabilität, Elastizität (Klemm- und Federwirkung), Temperaturbeständigkeit, Schadstoffunbedenklichkeit).

Es ist gemäß der Erfindung in vorteilhafter Weise möglich, die Systemkomponenten vor dem Einbau jeweils industriell in Serienproduktion herzustellen. Die Art der Fixierung der einzelnen Systemkomponenten beruht auf einfachen physikalischen Grundprinzipien und ein Systemeinbau ist mit relativ geringem Material- und Arbeitsaufwand direkt in den vorgegebenen Untergrund/Unterbau möglich.

Durch den modularen und variablen Aufbau ist ein hoher Wiederverwendungsgrad der einzelnen Systemkomponenten gewährleistet, wodurch ein günstiger Entsorgungsgrad mit minimalen Arbeitsaufwand bei rückstandfreiem Ausbau des Systems entsteht. Die Recyclingfähigkeit des nicht mehr verwendbaren Materials ist durch eine günstige Materialauswahl sichergestellt. Hierbei können entweder eine Grundplatte und/oder ein Längsprofil der Systemkomponenten aus Kunststoff oder Metall sein.

Ausführungsbeispiele der Erfindung werden anhand der Zeichnung erläutert. Es zeigen:
Figur 1 einen Schnitt durch eine Anwendung des erfindungsgemäßen Befestigungssystems;
Figuren 2 und 3 zwei Darstellungen eines Ausführungsbeispiels einer Grundplatte;
Figuren 4 bis 7 verschiedene Schnitte durch die Grundplatte nach Figur 2;
Figur 8 und 9 zwei Darstellungen eines Erdnagels für das Befestigungssystem;
Figuren 10 und 11 ein Ausführungsbeispiel für ein Längsprofil des Befestigungssystems;
Figuren 12 und 13 ein weiteres Ausführungsbeispiel einer Grundplatte;
Figur 14 einen Schnitt durch die Grundplatte nach Figur 12;
Figur 15 ein weiteres Ausführungsbeispiel eines Längsprofils;
Figur 16 ein Ausführungsbeispiel einer Kombination aus Längsprofil und Grundplatte;
Figuren 17, 18 und 19 zwei Ansichten eines weiteren Ausführungsbeispiels;
Figur 20 ein Ausführungsbeispiel für ein Längsprofil;
Figur 21 einen Schnitt durch eine Grundplatte nach Figur 17;
Figuren 22 und 23 einen weiteren Schnitt durch eine Ausführungsform der Grundplatte und des Längsprofils; Figuren 24 und 26 einen Schnitt durch ein Hohlkammer-profilband und
Figuren 27 und 28 weitere Ausführungsbeispiele einer Grundplatte und Kombinationen von Grundplatte und Längsprofil.

### Beschreibung der Ausführungsbeispiele

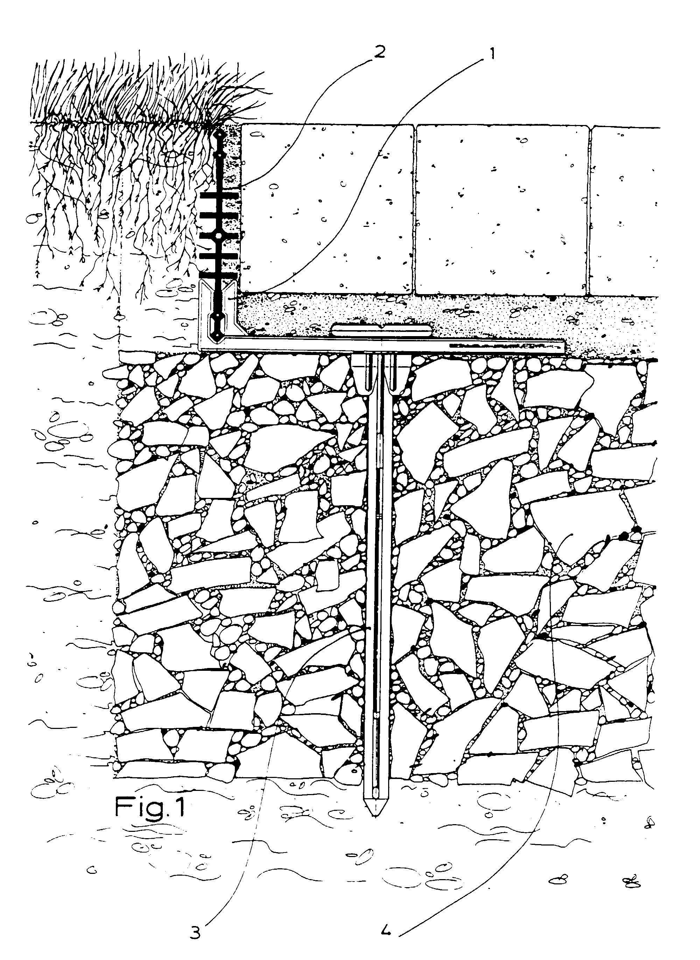

In Figur 1 ist das Grundprinzip eines ersten Ausführungsbeispiels eines Befestigungssystems dargestellt. Das System besteht aus drei Grundkomponenten: einer Grundplatte 1 als Boden- und Halterungsplatte, einem Profilband als Längsprofil 2 (Trennprofil oder Richtungsprofil) und eine Grundfixierung 3 in Form eines Ankers, eines Nagels oder eines Stiftes für die Fixierung im Boden bzw. im Unterbau.

Die Fixierung der Grundplatte 1 erfolgt durch einen besonders geformten Erdnagel als Grundfixierung 3, welcher in einen Unterbau 4 bzw. in das Erdreich getrieben wird. Dieser Erdnagel 3 ist so profiliert, daß er sich, bspw. durch die Nuten und Querrippen, im Untergrund verankert (verklammert) und unterhalb seines Schlagkopfes in der Grundplatte 1 fixiert ist.

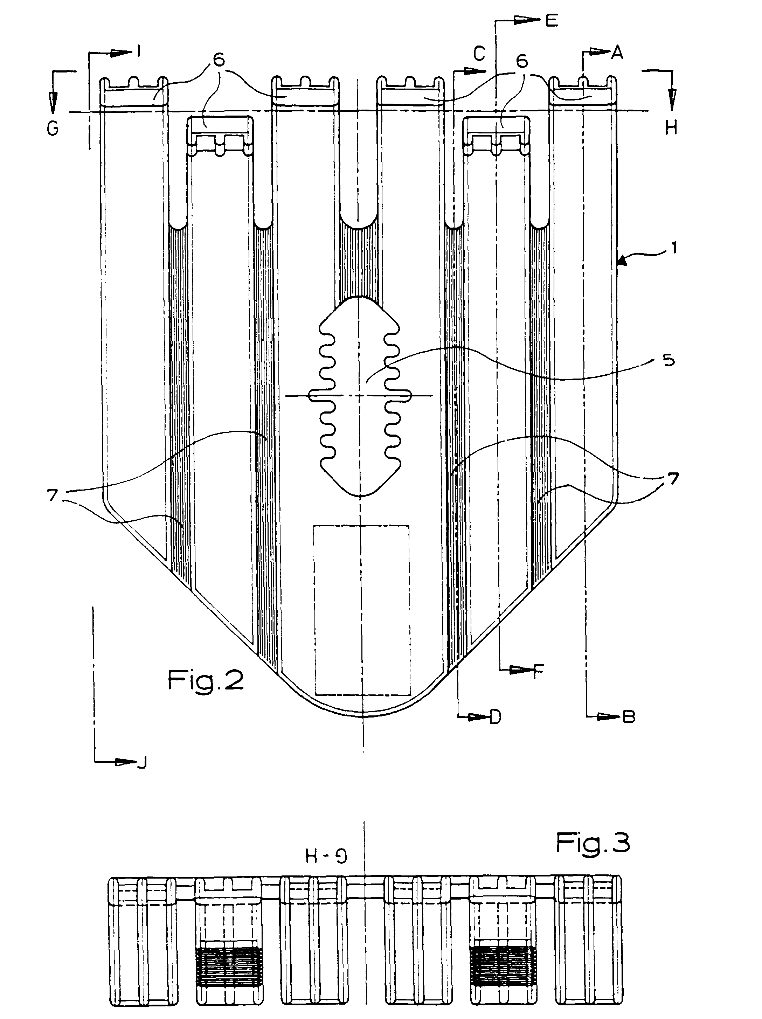

Ein Ausführungsbeispiel der Grundplatte 1 wird anhand Figur 2 als Draufsicht und anhand Figur 3 als Schnitt erläutert. Die Grundplatte 1 hat eine breite Auflagefläche mit einer profilierten Längsnut 5 für die Aufnahme des Erdnagels 3 und senkrechte Klemmreihen 6 zur Aufnahme und Fixierung des Längsprofils 2, welches anhand der folgenden Figuren erläutert wird. Zur Erhöhung der Steifigkeit und Festigkeit ist die Grundplatte 1 mittels abgestimmter Querschnittgestaltung bzw. Verrippungen 7 verwindungssteif. Im Bereich der Klemmreihe 6 erlaubt die abgestimmte Verrippung hier eine bedingte Elastizität ( Federwirkung ) der Klemmfinger.

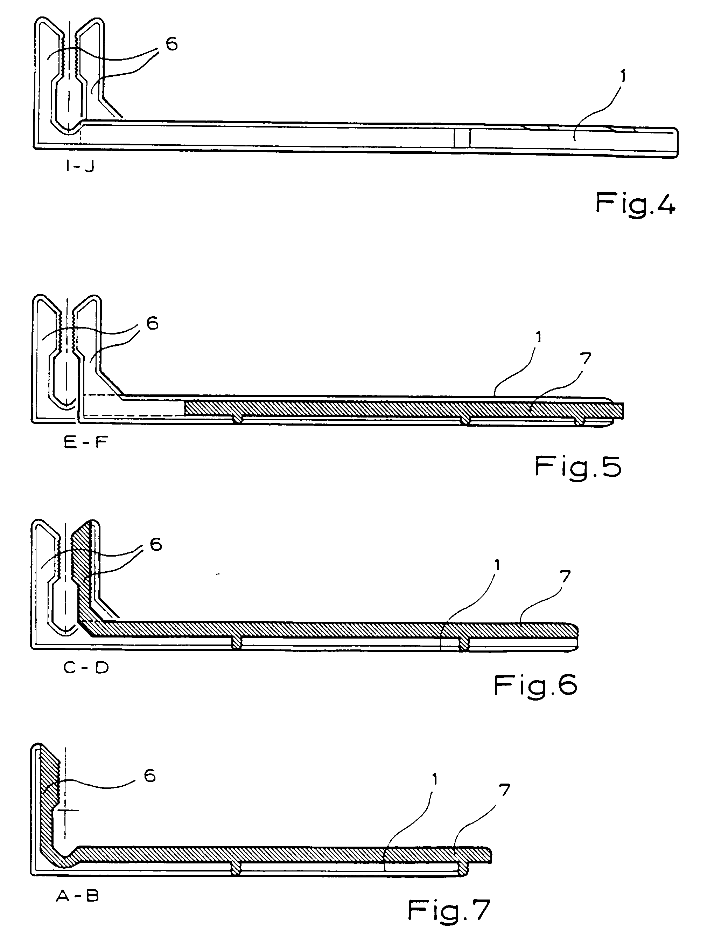

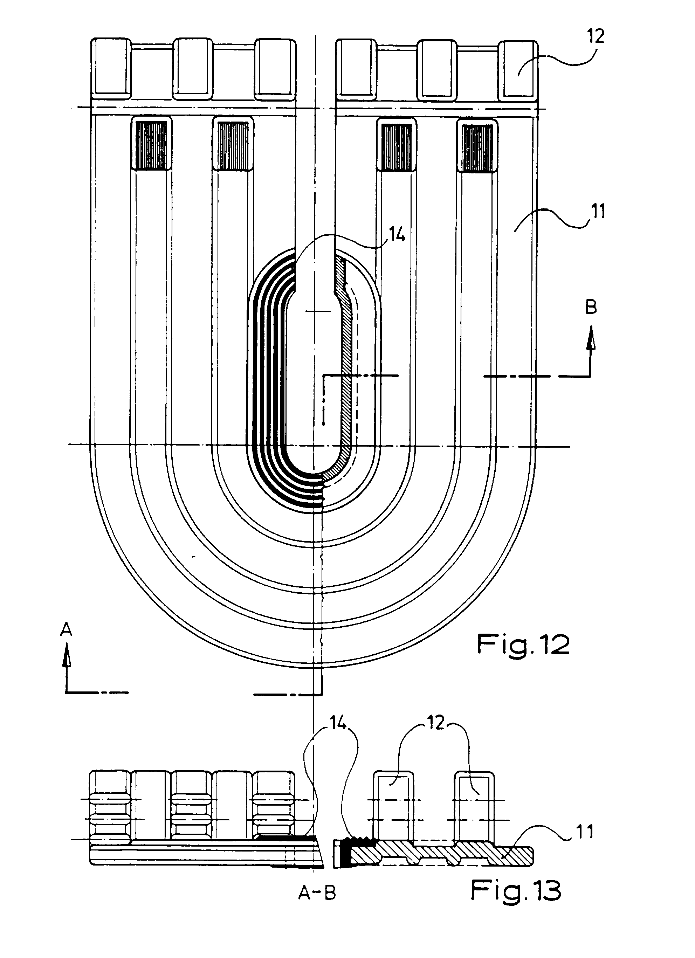

Die Klemmreihen 6 bestehen aus senkrecht ausgebildeten, versetzt angeordneten Klemmfingern, in die das Profilband 2 unter Druck eingepreßt und anschließen unter Federwirkung der Klemmfinger mit der Grundplatte 1 verklammert wird. Die Verklammerung der Trennschiene 2 mit der Grundplatte 1 wird weiter unten anhand der Figur 11 erläutert. Die Ausgestaltung der Grundplatte 1 wird ebenfalls anhand verschiedener Ansichten nach der Figuren 2 und 3 aufgrund der Schnittdarstellungen nach Figuren 4 bis 7 im einzelnen erkennbar.

Die Längsnut 5 zur Aufnahme des Erdnagels 3 ist so profiliert, daß dieser sich durch das Hineintreiben unterhalb seines Schlagkopfes in der Grundplatte 1 fest fixiert. Korrekturmöglichkeiten der Grundplatte 1 sind durch leichtes Anheben des Erdnagels 3 und anschließend durch Ausrichten der Grundplatte 1 und erneutes Fixieren mittels des Erdnagels 3 gegeben.

Die Längsnut 5 in der Grundplatte 1 ist so gestaltet, daß in Längsrichtung beidseitig ein gezahnter Profilrand (Rasterung) entsteht. Die Zahnung ist auf die des Schlagkopfes 8 vom Erdnagel 3 abgestimmt und so gewählt, daß die Grundplatte 1 und der Erdnagel 3 immer über drei Zahnachsen verklammert werden. Die mittlere und mit Überlänge gestaltete Quernut der Zahnreihe visualisiert die Einbaumitte (integr. Einbauhilfe) für den Erdnagel 3.

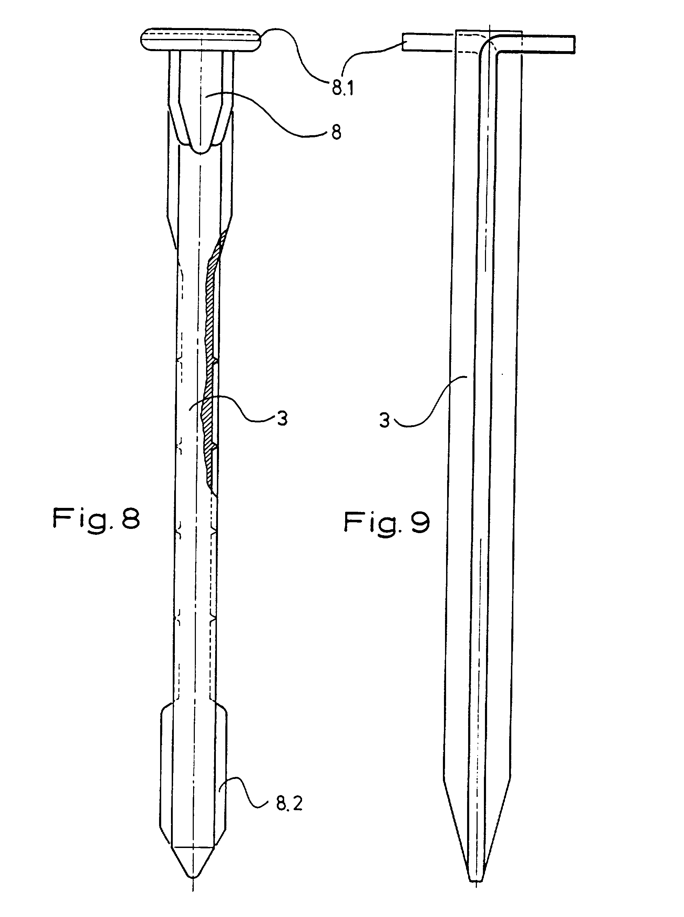

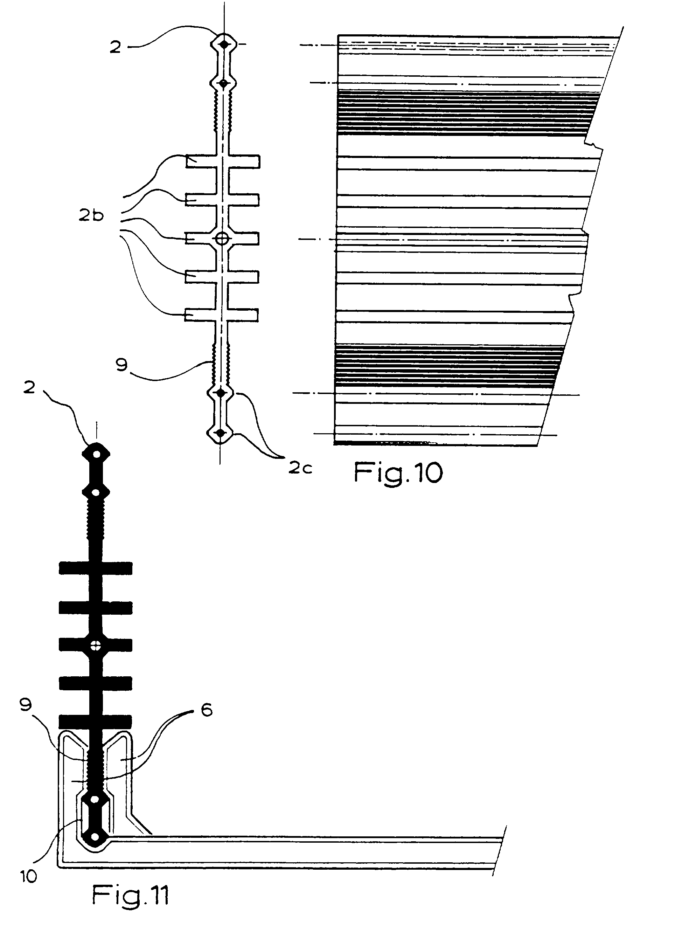

Die Ausgestaltung der Grundplatte 1 ist, wie oben erwähnt, anhand verschiedener Schnittdarstellungen nach den Figuren 2 bis 3 und 4 bis 7 im Einzelnen erkennbar. Figur 8 zeigt beispielhaft einen Erdnagel 3 als Fixierung für die Grundplatte, wobei hier deutliche eine dem Profil der Längsnut 5 angepaßte Gestaltung unterhalb des Schlagkopfes 8 erkennbar ist (vgl. auch Fig. 9).

Die Verklemmung des Trenn- oder Längsprofils 2 in die Grundplatte 1 ist aus den Figuren 10 und 11 ersichtlich. Das Längsprofil 2 wird hierbei mit einer Rippung 9 als Anpressfläche in eine, mit einer Vorspannung versehene, Klemmaufnahme 10 getrieben, zur Verklammerung der Grundplatte 1 mit dem Längsprofil 2. Hierbei wird das Längsprofil 2, welches in sich steif ist, beispielsweise durch Schlag in die Klemmaufnahme 10 getrieben. Die relativ elastischen Klemmaufnahmen 10 (Finger) sind mit den Nuten bzw. Rippungen 9 versehen, damit das Längsprofil, welches im Klemmbereich nachgiebig (elastisch) ist, durch Einpressung steif fixiert wird.

Es können auch relativ elastische Klemmaufnahmen 10 verwendet werden, die in ihrem Profil im Befestigungsbereich derart steif sind, daß die Finger durch das Einpressen auseinandergetrieben werden und sich anschließend als Klammer formschlüssig um das Längsprofil 2 legen.

Die steifen Klemmaufnahmen 10 besitzen eine einseitig verstärkte Rückenabstützung in der Grundplatte 1, in die das Längsprofil zur Verklammerung mechanisch eingeführt und durch leichte Drehung fixiert wird.

Die Querschnittsgestaltung der Längsprofile 2 ist hierbei abgestimmt auf die Geometrie und die Befestigungsprinzipien bzw. die Verklammerungsarten in der Grundplatte 1. Die Querschnittsgestaltung aller Längsprofile 2 ist entsprechend dem jeweils eingesetzten Werkstoff und dem jeweiligen Befestigungsprinzip so konstruiert, daß bei geringem Materialeinsatz einerseits ein Höchstmaß an Durchbiegefestigkeit und andererseits die vorhandene Durchbiegefestigkeit für bogenförmige Verlegung des Profilbandes 2 genutzt wird. Hierzu sind im Besonderen bei Stangpreßprofilen die Stabilisierungsrippen und Profiloberkanten verstärkt ausgebildet.

Bei relativ steifen Klemmaufnahmen 10 ist das Längsprofil 2 im Befestigungsbereich so elastisch, daß sich das Längsprofil 2 durch das Einpressen verengt und sich anschließend an die Wangen der Klemmaufnahmen 10 anpreßt.

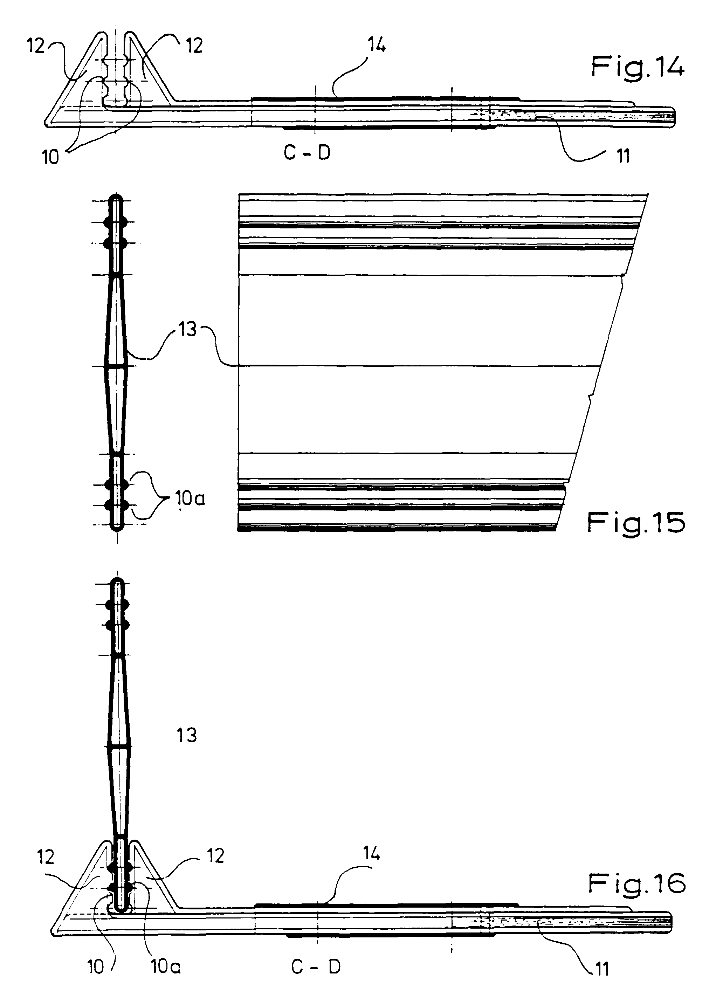

Bei einer weiteren Alternative anhand der Figuren 11 bis 15 mit einer weiteren Ausführungsvariante einer Grundplatte 11 sind die Klemmaufnahmen 10 (vgl. Figur 13) ebenfalls relativ steif und ein Längsprofil 13 (vgl. Figur 14) ist im Befestigungsbereich ebenfalls starr und an den Querschnitt der Klemmaufnahmen 10 angepaßt. Die Verklammerung, wie in Figur 15 gezeigt, findet hier durch eine leichte Dehnung mechanisch statt. Durch die Dehnbewegung arretiert sich das Längsprofil 13 in die gewünschte senkrechte Einbauposition in den Klemmaufnahmen 10.

Im folgenden werden unter Einbeziehung weiterer Figuren die Ausführungsbeispiele funktionell anhand der Prinzipien A bis D erläutert.

### Prinzip A:

Die Verklammerung (Arretierung) des Profilbandes 2 mit der Grundplatte 1 ist in Figur 11 dargestellt. Figur 10 stellt den Querschnitt vom Profilband 2 dar. Es können hierbei relativ elastische Klemmfinger 6, Klemmaufnahmen 10 für das Verbinden des Profilbandes 2 mit der Grundplatte 1 verwendet werden. Das an sich steif ausgelegte Längsprofil 2 wird mit den als Spreizer 2c gestalteten, mit Riffelung versehenen Randabschlüssen in eine, mit Vorspannung versehene, Klemmaufnahme 10 der Grundplatte 1 getrieben. Die unter Vorspannung und daher bedingt elastischen Klemmfinger 6 der Klemmaufnahme 10 werden durch das Einpressen auseinandergetrieben und legen sich anschließen als Klammer formschlüssig um das Profilband 2 an.

Eine Korrekturmöglichkeit beim Richtungsverlauf vom Profilband 2 ist über Justage der Grundplatte 1 gegeben. Die Justage erfolgt durch leichtes Anheben des Erdnagels 3 um die Höhe des Schlagkopfes 8 aus der Grundplatte 1 bzw. aus dem Untergrund 4. Beim Anheben wird der kleinste Querschnitt des Erdnagels 3 freigegeben und somit die Verklammerung der Grundplatte 1 über die Längsnut 5 und dem Schlagkopf der Erdnagels 3 aufgehoben. Dadurch ist es möglich, die Elemente 1 und 2 neu zu positionieren und durch erneutes Eintreiben des Erdnagels 3 in den Unterbau 4 zu fixieren.

### Prinzip B:

Eine Darstellung dieses Prinzips erfolgt anhand der Figuren 14 bis 16. Es handelt sich hierbei um eine Umkehrung des vorhergehend beschriebenen Prinzips A.

Prinzip B basiert auf einer Hohlkammerkonstruktion und nutzt das konstruktiv -/ materialbedingte Dehnverhalten von Profilband 13 bei mechanischer Einwirkung aus.

Bei diesem Ausführungsbeispiel der Grundplatte 11 sind die Klemmblöcke 12 (vgl. Figur 13-14) steif und ein Hohlkammer - Profilband 13 (vgl. Figur 15-16) ist im Klemmbereich teilweise elastisch und an den Querschnitt der Klemmaufnahmen 10 der Klemmböcke 12 angepaßt. Die Verklammerung, wie in Figur 16 gezeigt, findet hier durch das Einpressen des Profilbandes 13 in die Klemmböcke 12 statt. Dabei verengt sich das Hohlkammer-Profilband 13 im Bereich der Dehnkammer-Verrippung 10a und preßt sich anschließend an die Wangen der Klemmblöcke 12 bzw. in die Klemmnuten 10. Durch die Dehnbewegung arretiert sich die Hohlkammer (Profilband 13) in die vorgegebene senkrechte Einbauposition.

Ein weiteres Merkmal dieses Ausführungsbeispiels ist die Aufnahme / Fixierung des Erdnagels 3 in die Grundplatte 11 und die damit bedingte Justagemöglichkeit des gesamten Systems. Im Gegensatz zu der bereits beschriebenen Funktionsweise der Längsnut 5 und des Erdnagels 3 (vgl. Beschreibung zu Figur 8) besitzt diese Lösungsvariante keine profilierte Längsnut 5; diese Funktion übernimmt eine aus Kunststoff ausgeführte Manschette 14, die in die entsprechende Öffnung 14.1 der Grundplatte 11 eingepreßt wird.

Durch das Eintreiben des Erdnagels 3 in den Untergrund bzw. in die Manschette 14 greift die Rippung des Schlagkopfes 8.1 in die Materialstruktur der Manschette ein; sie preßt sich an die Seiten an und verbindet sich mit der selben bzw. mit der Grundplatte 11. Es entsteht dabei durch Materialverformung eine Verzahnung beider Systemkomponenten. Beim Einsatz von speziellem Kunststoff, ist der Vorgang wiederholbar und eine stufenlose Justierung wird erreicht. Das Prinzip ist bei allen Ausführungsbeispielen der Grundplatten aus Metall verwendbar.

### Prinzip C:

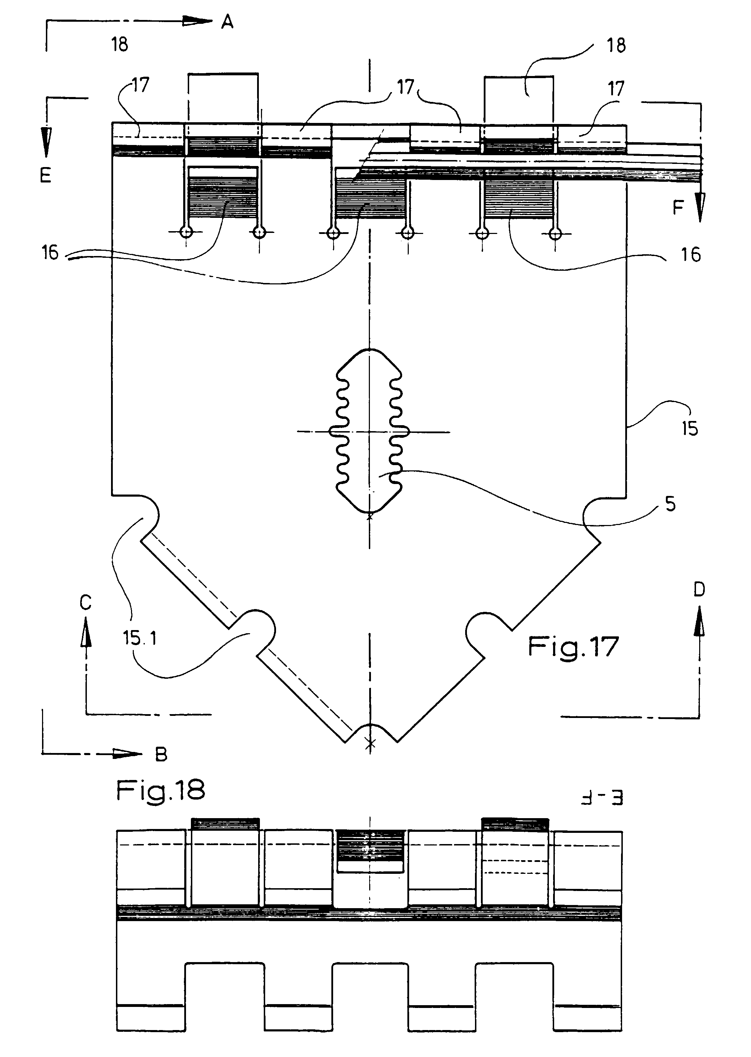

Dieses Funktionsprinzip wird anhand der Figuren 17 bis 23 erläutert.

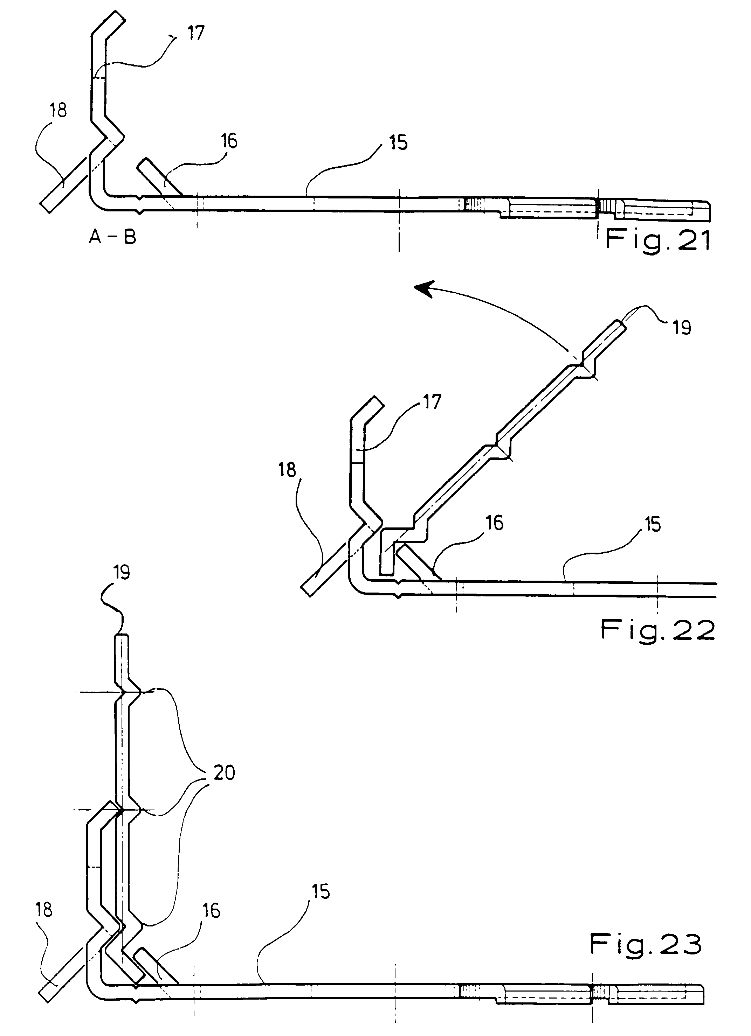

Bei diesem Ausführungsbeispiel der Grundplatte 15 sind die Bandstützen 16,17 asymmetrisch ausgebildet (vgl. Figur 21).

Aus den Figuren 22 und 23 ist das Funktionsprinzip C erkennbar, wobei hier das Profilband 19 zwischen beiden Bandstützenreihen 16,17 lose eingeführt und durch Drehung in die Senkrechte fixiert wird. So übernehmen Finger 17 die Funktion von Bandabstützung gegen seitlichen Druck, der primär beim Einbau vorkommt.

Der Finger 16 verhindert dabei das weitere Verdrehen des Profilbandes 19 und stabilisiert die fixierte Position. Die Stütze 18 ist vorgelagert angebracht um die Schenkellänge der Bandstütze 17 zu verkürzen und die Auflagefläche, d.h. die statische Stabilität der Systemkomponenten 13 und 15 weiter zu erhöhen.

Die Konstruktion der beiden Komponenten, die des Profilbandes 17 sowie die der Bandstützen 16 und 17 ist so aufeinander abgestimmt, daß diese sich bei statischer Einwirkung auf das Profilband gegenseitig stabilisieren, d.h. daß ein seitlicher Druck auf beide Systemkomponenten verteilt wird.

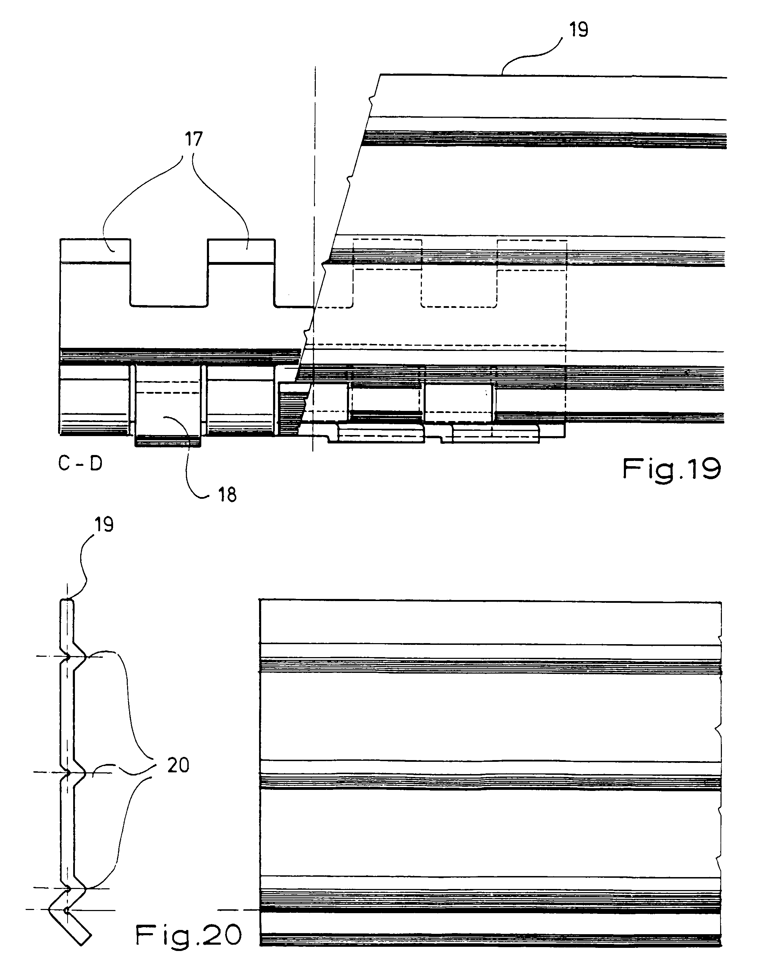

Die Figuren 20 und 23 zeigen in Ansicht und Schnitt die Geometrie des Profilbandes 19 auf, wobei die Längsprofilierung 20 einerseits als Bandversteifung und andererseits als Auflage für die Stützfinger 17 bzw. als Widerhaken beim Stützfinger 16 dient.

### Prinzip D:

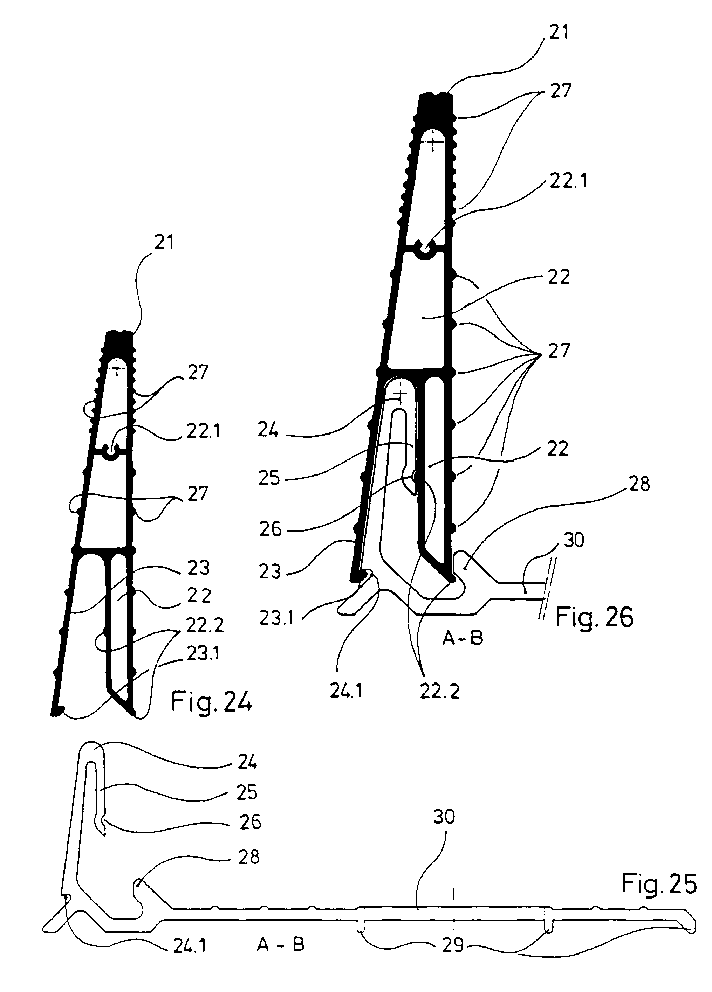

Das Prinzip dieser Ausführungsvariante wird anhand der Figuren 24 bis 28 erläutert. Das Funktionsprinzip D ist die Kombination bzw. Erweiterung der bereits beschriebenen Funktionsprinzipien B und C. Die mechanische Einwirkungen werden hierbei auf das Profilband 21 und einen Steckdorn 24 einer Grundplatte 30 verteilt.

Die Verklammerung bzw. Arretierung des Profilbandes 21 mit der Grundplatte 30 ist in Figur 26 dargestellt. Die Figuren 25 und 24 zeigen die Querschnitte der Grundplatte 30 sowie des Profilbandes 21. Das Profilband 21 wird dabei mit einer offenen Hohlkammer 22a auf den Steckdorn 24 aufgesetzt und heruntergedrückt. Dabei werden die mechanischen Widerstände eines Klippsteges 22.2 durch eine Querschnittsverengung der Hohlkammer 22 und durch eine Nachgiebigkeit des Federarms 25 zunächst überwunden und der elastisch gehaltene Federschenkel 23 gleichzeitig gespreizt, so daß dieser sich nach dem Einrasten von Preßstegen 22.2 in Einpreßnuten 26 mit der Klippnut 24.1 des Steckdorns 24 verklammert. Durch dieses Prinzip wird der Steckdorn 24 verdeckt und gegen mechanische Einwirkungen geschützt.

Bei der Aneinanderreihung von Profilbändern 21 in Längsrichtung werden diese an den Stößen mit Stiften, die in eine Verbindungskanal 22.1 eingeführt werden, miteinander verbunden und gegen Verdrehen ( Spreizen ) gesichert.

Figur 30 zeigt die Grundplatte 30 mit ihren Funktionsbestandteilen. Diese sind im einzelnen: Steckdorn 24 mit Klippnut 24.1 und Federarm 25 mit Einpreßnut 26. Stege 29 versteifen dabei die Grundplatte 30 in Längsrichtung. Die Grundplatte 30 wird bei dieser Ausführungsversion durch das Ablängen des Grundplatten-Strangpreßprofils hergestellt. Hierbei können je nach Bedarf unterschiedlich breite Grundlatten 30 einfachst hergestellt werden.

Die Figuren 24 und 26 zeigen das Profilband 21 mit Funktionsbestandteilen im Querschnitt. Die Funktionsbestandteile sind im einzelnen : eine Hohlkammer 22 mit Preßstegen 22.2 und Verbindungskanal 22.1, eine Hohlkammer 22a mit Federschenkel 23 und Widerhaken 23.1. Eine umlaufende Riffelung 27 der Bandoberfläche dient zum Teil zur statischen Flächenstabilisierung und als Abstandshalter für Belagsgut sowie zur optischen Aufwertung der Oberfläche.

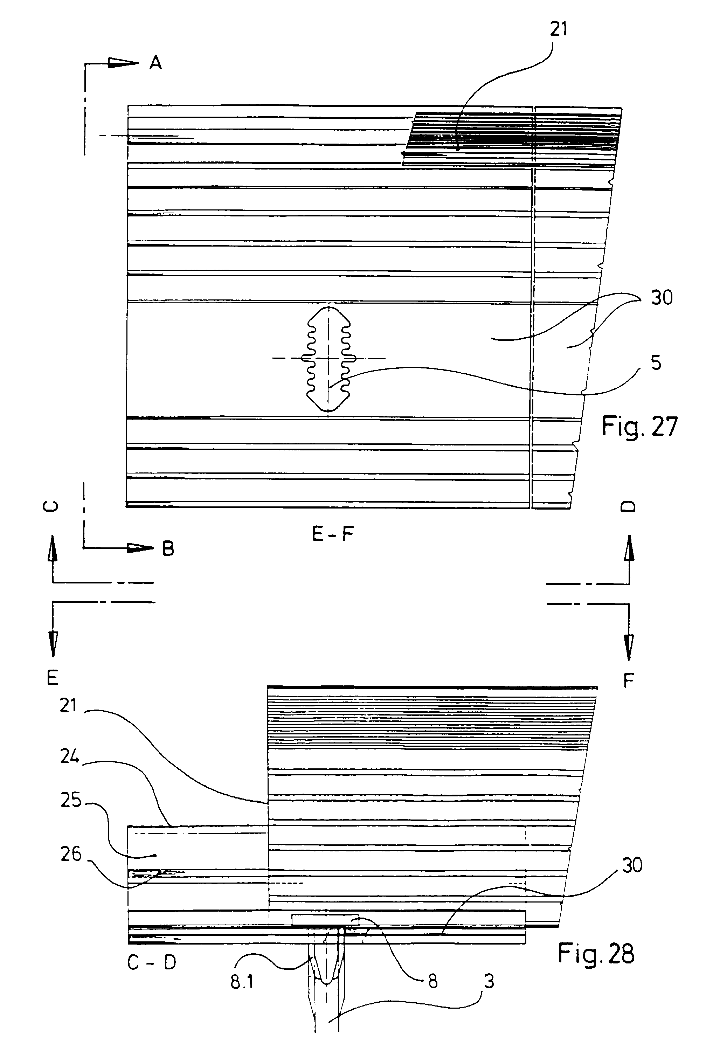

In Figur 27 und 28 werden darüber hinaus die verschiedenen Ansichten der Systemkomponenten 1 bis 3 dargestellt.

## Patentansprüche

1. Befestigungssystem für Randeinfassungen an baulichen Anlagen, mit
- mindestens einem Längsprofil (2) als Randeinfassung und einer mechanischen Fixierung (3) für das Längsprofil (2), wobei die mechanische Fixierung (3) in der baulichen Anlage verankerbar ist, bei dem
- das Befestigungssystem aus Modulen mit jeweils drei Komponenten aufgebaut ist, wobei jedes Modul jeweils
- als erste Komponente eine Grundplatte (1),
- als zweite Komponente die mechanische Fixierung (3), welche in der Grundplatte (1) aufnehmbar ist, und
- als dritte Komponente ein Längsprofil (2) über die gesamte Länge des Moduls aufweist, das mit der Grundplatte (1) flexibel verbindbar ist.

2. Befestigungssystem nach Anspruch 1, **dadurch gekennzeichnet,** daß
- die Fixierungen (3) aus Erdnägeln bestehen, die in den Untergrund der baulichen Anlage eintreibbar sind und über Profilierungen in der jeweiligen Grundplatte (1) verankerbar sind.

3. Befestigungssystem nach Anspruch 2, **dadurch gekennzeichnet,** daß
- Profilierungen oder Stege der Erdnägel (3) in eine entsprechende Längsnut (5) der Grundplatte (1) eingreifen.

4. Befestigungssystem nach Anspruch 3, **dadurch gekennzeichnet,** daß
- die Profilierungen oder Stege (8.1) der Erdnägel (3) in eine Kunststoffmanschette (14), die in die Längsnut (5) der Grundplatte (11) eingesetzt ist, eingebracht ist.

5. Befestigungssystem nach einem der Ansprüche 1 bis 4, **dadurch gekennzeichnet,** daß
- die Grundplatte (1) an einem Ende mit einer Klemmreihe (6) versehen ist, die eine Klemmaufnahme (10) für das jeweils senkrecht zur Ebene der Grundplatte (1) einzuführende Längsprofil (2) bildet.

6. Befestigungssystem nach einem der vorhergehenden Ansprüche, **dadurch gekennzeichnet,** daß
- das Längsprofil (2) in Längsrichtung Rippungen (2a,2b) zur Erhöhung der Bandsteifigkeit aufweist.

7. Befestigungssystem nach Anspruch 5, **dadurch gekennzeichnet,** daß
- die Klemmaufnahme (10) mit mindestens einem Schenkel flexibel ausgeführt ist und das Längsprofil (2) mit einer entsprechenden Profilierung in diese einrastbar ist.

8. Befestigungssystem nach Anspruch 5, **dadurch gekennzeichnet,** daß
- die Klemmaufnahmen (10) starr ausgeführt sind und das Längsprofil (2) mit einer entsprechenden flexiblen Profilierung in diese einrastbar ist.

9. Befestigungssystem nach Anspruch 8, **dadurch gekennzeichnet,** daß
- die Klemmaufnahmen (10) asymmetrisch und starr ausgeführt sind und das steife Längsprofil (2) mit angepaßtem Querschnitt in diese einführbar und eindrehbar ist, wobei das Längsprofil (2) auf eine der Klemmaufnahmen (10) abstützbar und in eine jeweils andere Klemmaufnahme (10) einhakbar ist.

10. Befestigungssystem nach Anspruch 5, **dadurch gekennzeichnet,** daß
- die Klemmaufnahmen (10) asymmetrisch und mindestens teilweise elastisch ausgeführt sind und das im Klemmbereich elastische Längsprofil (2) mit angepaßtem Querschnitt auf diese aufsetzbar ist, wobei das Längsprofil (2) mit der jeweiligen Klemmaufnahme (10) über eine Verhakung verbindbar ist.

## Claims

1. a fastening system for borderings on construction systems with
- at least one longitudinal section (2) as a bordering and a mechanical fixing device (3) for the longitudinal section (2), whereby the mechanical fixing device (3) may be anchored in the construction system, where
- the fastening system is built up of modules with three components each, whereby each module has
- a base plate (1) as its first component,
- the mechanical fixing device (3) as its second component that can be accommodated in the base plate (1) and,
- a longitudinal section (2) as the third component over the entire length of the module that can be flexibly linked to the base plate (1)

2. a fastening system according to claim 1, characterised by the fact that
- the fixing devices (3) consist of earth nails that can be driven into the subbase of the construction systems and can be anchored in each base plate (1) through profiling.

3. a fastening system according to claim 2, characterised by the fact that
- the profiling or webs of the earth nails (3) contact a corresponding longitudinal groove (5) of the base plate (1).

4. a fastening system according to claim 3, characterised by the fact that
- the profiling or webs (8.1) of the earth nails (3) are placed into a plastic collar (14) that is inserted into the longitudinal groove (5) of the base plate (11).

5. a fastening system according to one of the claims 1 through 4, characterised by the fact that
- the base plate (1) is provided with a row of clamps at one end that forms a clamp receptacle (10) for the longitudinal section (2) to be inserted in a vertical direction to the plane of the base plate (1).

6. a fastening system according to one of the previous claims, characterised by the fact that
- the longitudinal section (2) has ribbing (2a, 2b) in the longitudinal direction to increase the band stiffness.

7. a fastening system according to claim 5, characterised by the fact that
- the clamp receptacle (10) is designed flexibly with at least one leg and the longitudinal section (2) can be snapped onto it with the corresponding profiling.

8. a fastening system according to claim 5, characterised by the fact that
- the clamp receptacles (10) are designed rigidly and the longitudinal section (2) can be snapped onto them with the corresponding flexible profiling.

9. a fastening system according to claim 8, characterised by the fact that
- the clamp receptacles (10) are designed asymmetrically and rigidly and the stiff longitudinal section (2) can be inserted and rotated into them with an adapted transverse section, whereby the longitudinal section (2) can be supported on one of the clamp receptacles (10) and hooked into one of the other clamp receptacles (10).

10. a fastening system according to claim 5, characterised by the fact that
- the clamp receptacles (10) are designed asymmetrically and at least partially elastically and the elastic longitudinal section (2) in the area of the clamp can be attached onto them with an adapted transverse section, whereby the longitudinal section (2) can be connected to the each clamp receptacle (10) by means of interlocking.

## Revendications

1. Système de fixation pour des encadrements latéraux sur des ouvrages, comprenant
- au moins un profilé longitudinal (2) comme encadrement latéral et une fixation mécanique (3) pour le profilé longitudinal (2), la fixation mécanique (3) étant ancrable dans l'ouvrage, pour lequel
- le système de fixation est construit à partir de modules comprenant respectivement trois composantes, chaque module présentant respectivement
- une plaque de base (1) comme première composante,
- la fixation mécanique (3) comme deuxième composante, laquelle est logeable dans la plaque de base (1) et
- comme troisième composante, un profilé longitudinal (2) sur toute la longueur du module qui est reliable d'une manière flexible avec la plaque de base (1).

2. Système de fixation selon la revendication 1, caractérisé en ce que
- les fixations (3) se composent de clous de sol qui peuvent être enfoncés dans le sous-sol de l'ouvrage et être ancrés dans la plaque de base (1) respective via des profilages.

3. Système de fixation selon la revendication 3, caractérisé en ce que
- des profilages ou âmes des clous de sol (3) encliquettent dans une rainure longitudinale (5) correspondante de la plaque de base (1).

4. Système de fixation selon la revendication 3, caractérisé en ce que
- les profilages ou âmes (8.1) des clous de sol (3) sont placés dans une manchette en plastique (14) qui est logée dans la rainure longitudinale (5) de la plaque de base (11).

5. Système de fixation selon une des revendications 1 à 4, caractérisé en ce que
- la plaque de base (1) est pourvue à une extrémité d'une rangée de dispositifs de serrage (6) qui forme un logement de serrage (10) pour respectivement le profilé longitudinal (2) à introduire verticalement par rapport au plan de la plaque de base (1).

6. Système de fixation selon une des revendications précédentes, caractérisé en ce que
- le profilé longitudinal (2) présente dans le sens longitudinal des nervures (2a, 2b) destinées à augmenter la rigidité de la bande.

7. Système de fixation selon la revendication 5, caractérisé en ce que
- le logement de serrage (10) est réalisé d'une manière flexible avec au moins une branche et que le profilé longitudinal (2) est encliquetable dans celui-ci avec un profilage correspondant.

8. Système de fixation selon la revendication 5, caractérisé en ce que
- les logements de serrage (10) sont réalisés d'une manière rigide et que le profilé longitudinal (2) est encliquetable dans ceux-ci avec un profilage flexible correspondant.

9. Système de fixation selon la revendication 8, caractérisé en ce que
- les logements de serrage sont réalisés d'une manière asymétrique et rigide et que le profilé longitudinal (2) rigide avec une section adaptée peut être introduit et vissé dans ceux-ci, le profilé longitudinal (2) pouvant être appuyé sur un des logements de serrage (10) et enclenché dans respectivement un autre logement de serrage (10).

10. Système de fixation selon la revendication 5, caractérisé en ce que
- les logements de serrage (10) sont réalisés d'une manière symétrique et au moins partiellement élastique et que le profilé longitudinal (2) élastique dans la zone de serrage, avec une section adaptée, peut être appliqué sur ceux-ci, le profilé longitudinal (2) pouvant être relié au logement de serrage (10) respectif via un accrochage
